(19) Europäisches Patentamt
European Patent Office
Office européen des brevets

(11) **EP 2 204 711 A1**

(12) **EUROPÄISCHE PATENTANMELDUNG**

(43) Veröffentlichungstag:
**07.07.2010 Patentblatt 2010/27**

(51) Int Cl.:
***G05B 19/416*** *(2006.01)*

(21) Anmeldenummer: **08172761.2**

(22) Anmeldetag: **23.12.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Siemens Aktiengesellschaft 80333 München (DE)**

(72) Erfinder:
• **Hertinger, Klaus 91056, Erlangen (DE)**
• **Stiehler, Horst 09217, Burgstädt (DE)**
• **Uhlich, Andreas 90530, Wendelstein (DE)**

(54) **Steuereinrichtung und Verfahren zur Steuerung einer zwischen einem Werkzeug und einem Werkstück örtlich im Raum verlaufenden Bewegung bei einer Werkzeugmaschine**

(57) Die Erfindung betrifft ein Verfahren zur Steuerung einer zwischen einem Werkzeug (3) und einem Werkstück (2) örtlich im Raum verlaufenden Bewegung bei einer Werkzeugmaschine, wobei die Geschwindigkeit der Bewegung bei der Bewegung in Abhängigkeit von der Geometrie einer Schneide (4) des Werkzeugs und der Werkstückgeometrie derart angepasst wird, dass der durch die Bewegung pro Zeiteinheit entstehende Materialvolumenabtrag am Werkstück (2) in einem vorgegebenen ersten Toleranzbereich liegt. Weiterhin betrifft die Erfindung eine diesbezügliche Steuereinrichtung. Die Erfindung ermöglicht die Erzielung einer hohen Oberflächenqualität eines Werkstücks (2) bei einer Bearbeitung des Werkstücks (2).

FIG 1

EP 2 204 711 A1

**Beschreibung**

Die Erfindung betrifft ein Verfahren zur Steuerung einer zwischen einem Werkzeug und einem Werkstück örtlich im Raum verlaufenden Bewegung bei einer Werkzeugmaschine. Weiterhin betrifft die Erfindung eine Steuereinrichtung zur Steuerung einer zwischen einem Werkzeug und einem Werkstück örtlich im Raum verlaufenden Bewegung bei einer Werkzeugmaschine.

Bei einer Werkzeugmaschine ist die bei der Bearbeitung des Werkstücks zu erzielende Oberflächenqualität des Werkstücks von den Schnittbedingungen abhängig.

Um eine gute Oberflächenqualität bei einer Bearbeitung eines Werkstücks zu erzielen sind über Befehle speziell vorgebbare Vorschübe für die Bewegung des Werkzeugs und/oder eines Werkstücks, die bei den Bearbeitungsvorgängen von Konturelementen, wie z.B. Fasen, Radien, gelten sollen, bekannt. Diese müssen jedoch zum einen aufwändig programmiert werden und vergrößern zum anderen, da in der Regel der Vorschub zur Erzielung einer guten Oberflächenqualität sehr klein gewählt wird, die Bearbeitungszeit des Werkstücks.

Es ist Aufgabe der Erfindung, ein Verfahren zur Steuerung einer zwischen einem Werkzeug und einem Werkstück örtlich im Raum verlaufenden Bewegung bei einer Werkzeugmaschine zu schaffen, dass eine hohe Oberflächenqualität des Werkstücks bei einer Bearbeitung des Werkstücks ermöglicht.

Diese Aufgabe wird gelöst durch ein Verfahren zur Steuerung einer zwischen einem Werkzeug und einem Werkstück örtlich im Raum verlaufenden Bewegung bei einer Werkzeugmaschine, wobei die Geschwindigkeit der Bewegung bei der Bewegung in Abhängigkeit von der Geometrie einer Schneide des Werkzeugs und der Werkstückgeometrie derart angepasst wird, dass der durch die Bewegung pro Zeiteinheit entstehende Materialvolumenabtrag am Werkstück in einem vorgegebenen ersten Toleranzbereich liegt.

Weiterhin wird diese Aufgabe gelöst durch Steuereinrichtung zur Steuerung einer zwischen einem Werkzeug und einem Werkstück örtlich im Raum verlaufenden Bewegung bei einer Werkzeugmaschine, wobei die Steuereinrichtung derart ausgebildet ist, dass von der Steuereinrichtung die Geschwindigkeit der Bewegung bei der Bewegung in Abhängigkeit von der Geometrie einer Schneide des Werkzeugs und der Werkstückgeometrie derart angepasst wird, dass der durch die Bewegung pro Zeiteinheit entstehende Materialvolumenabtrag am Werkstück in einem vorgegebenen ersten Toleranzbereich liegt.

Die Erfindung ermöglicht eine hohe Oberflächenqualität des Werkstücks bei kurzen Bearbeitungszeiten zu erzielen und die Lebensdauer (Standzeit/Standweg des Werkzeugs) zu erhöhen.

Vorteilhafte Ausbildungen des Verfahrens ergeben sich analog zu vorteilhaften Ausbildungen der Steuereinrichtung und umgekehrt.

Vorteilhafte Ausbildungen der Erfindung ergeben sich aus den abhängigen Ansprüchen.

Es erweist sich als vorteilhaft, wenn die Bewegung einen ersten Bewegungsabschnitt und einen auf den ersten Bewegungsabschnitt direkt folgenden zweiten Bewegungsabschnitt aufweist, wobei auf dem zweiten Bewegungsabschnitt die Bewegung in einer von der Bewegung auf dem ersten Bewegungsabschnitt unterschiedlichen Bewegungsrichtung erfolgt, wobei die Geschwindigkeit der Bewegung im Bereich des Übergangs vom ersten Bewegungsabschnitt zum zweiten Bewegungsabschnitt in Abhängigkeit von der Geometrie der Schneide des Werkzeugs und der Werkstückgeometrie derart angepasst wird, dass der durch die Bewegung pro Zeiteinheit entstehende Materialvolumenabtrag am Werkstück im Bereich des Übergangs in einem vorgegebenen ersten Toleranzbereich liegt.

Weiterhin erweist sich als vorteilhaft, wenn die Bewegung derart durchgeführt wird, dass die Beschleunigung der Bewegung in einem vorgegebenen zweiten Toleranzbereich liegt.

Weiterhin erweist sich als vorteilhaft, wenn die Bewegung derart durchgeführt, dass der Ruck der Bewegung in einem vorgegebenen dritten Toleranzbereich liegt.

Weiterhin erweist es sich als vorteilhaft eine Werkzeugmaschine mit der erfindungsgemäßen Steuereinrichtung auszubilden.

Ein Ausführungsbeispiel der Erfindung ist in der Zeichnung dargestellt und wird im Folgenden näher erläutert. Dabei zeigen:

FIG 1    eine zwischen einem Werkzeug und einem Werkstück örtlich im Raum verlaufende Bewegung bei einer rotationssymmetrischen Bearbeitung eines Werkstücks und

FIG 2    eine erfindungsgemäße Steuereinrichtung zur Steuerung einer zwischen einem Werkzeug und einem Werkstück örtlich im Raum verlaufenden Bewegung bei einer Werkzeugmaschine

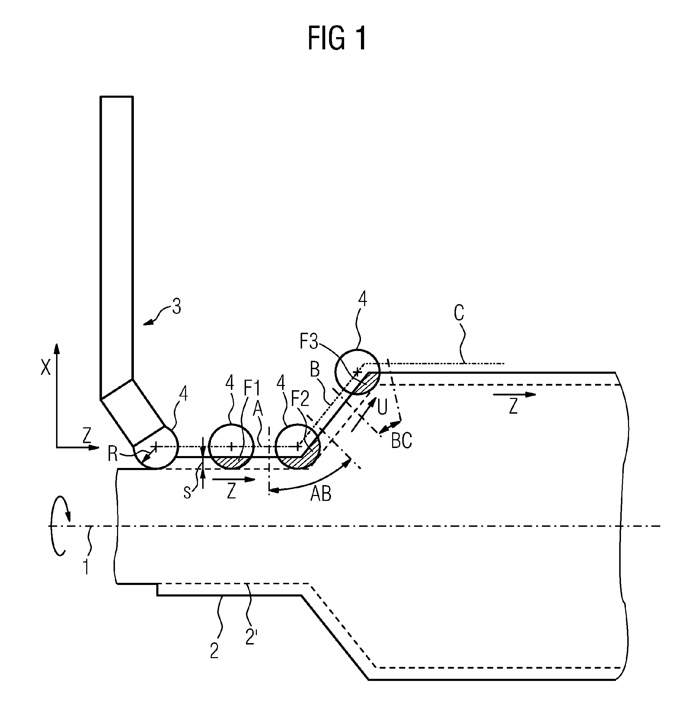

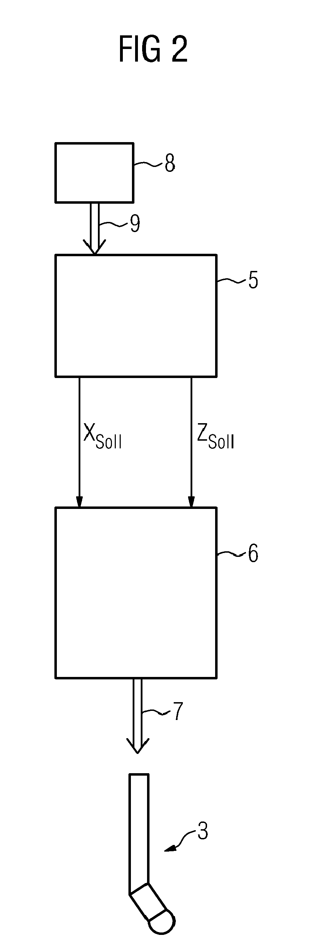

In FIG 1 ist in Form einer schematisierten Darstellung die Bewegung eines Werkzeugs 3 bei einer als Drehmaschine ausgebildeten Werkzeugmaschine schematisiert dargestellt. Der Verlauf der Bewegung des Werkzeugs 3 zur rotationssymmetrischen Bearbeitung des Werkstücks 2 wird dabei anhand eines Teileprogramms 8 (siehe FIG 2), das Steuerbefehle enthält, ermittelt.

Die Bewegung des Werkzeugs 3 weist dabei im Rahmen des Ausführungsbeispiels drei aufeinanderfolgende Bewegungsabschnitte A, B und C auf. Auf dem ersten Bewegungsabschnitt A folgt dabei direkt der zweite Bewegungsabschnitt B und auf den zweiten Bewegungsabschnitt B folgt direkt ein dritter Bewegungsabschnitt C. Auf dem Bewegungsabschnitt A verläuft die Bewegung in Bewegungsrichtung Z, d.h. im Rahmen des Ausführungsbeispiels in waagrechter Richtung von links nach rechts, gemäß FIG 1. Auf dem Bewegungsabschnitt B erfolgt die Bewegung des Werkzeugs 3 in Bewegungsrichtung U, d.h. im Rahmen des Ausführungsbeispiels schräg von links unten nach rechts oben und auf dem dritten Bewegungsabschnitt folgt die Bewegung des Werkzeugs 3 wieder in Bewegungsrichtung Z, d.h. in waagrechter Richtung von links nach rechts gemäß FIG 1.

Das Werkzeug 3 weist eine Schneide 4 auf, die eine kreisförmige Geometrie mit einem Radius R aufweist. Der Übersichtlichkeit halber ist in FIG 1 nur einmal das Werkzeug 3 mit der Schneide 4 dargestellt und ansonsten für die einzelnen Bewegungsabschnitte nur noch die Schneide 4. Das Werkzeug 3 kann dabei mittels der Übersichtlichkeit halber nicht dargestellter Antriebe in Z-Richtung und in X-Richtung (siehe dargestelltes Koordinatensystem) gleichzeitig bewegt werden. Das Werkstück 2 rotiert dabei um die Drehachse 1, so dass mittels des Werkzeugs 3 eine rotationssymmetrische Bearbeitung des Werkstücks 2 stattfindet.

Die drei Bewegungsabschnitte A, B und C bilden zusammengenommen den örtlichen Verlauf der Bewegung des Werkzeugs 3 zur rotationssymmetrischen Bearbeitung des Werkstücks. In FIG 1 ist die Geometrie 2' des Werkstücks gestrichelt dargestellt, die sich nach durchgeführter Bewegung des Werkzeugs 3 ergibt. Die aktuelle Geometrie des Werkstücks 2 ist dabei in FIG 1 mit durchgezogenen Linien dargestellt. Die Tiefe, mit der die Schneide 4 bei der rotationssymmetrischen Bearbeitung in das Material des Werkstücks 2 einfährt, wird als Schnitttiefe S bezeichnet und ist in FIG 1 eingezeichnet. Der Materialvolumenabtrag der pro Zeiteinheit durch die Schneide 4 am Werkstück 2 entsteht, hängt von der Fläche der Schneide 4 ab, welche gerade am Materialabtrag beteiligt ist, von der Geschwindigkeit der Bewegung des Werkzeugs 3 und damit der Schneide 4 in Z-Richtung und in U-Richtung, sowie von der Drehgeschwindigkeit des Materials des Werkstücks 2 das gerade abgetragen wird im Bereich des Eingriffs der Schneide 4. Der Materialvolumenabtrag ist dabei das durch das Werkzeug vom Werkstück abgetragene Materialvolumen. Die Fläche der Schneide 4, die gerade an der momentanen Position der Schneide in Eingriff kommt und so zum Materialvolumenabtrag beiträgt, kann aus der Geometrie der Schneide 4 und der Zustelltiefe S oder allgemeiner ausgedrückt, aus der Geometrie der Schneide 4 und der Geometrie des Werkstücks 2 ermitteln werden.

In FIG 1 ist die Fläche der Schneide 4, die zum Materialabtrag beiträgt und sich bei der Bewegung der Schneide 4 in Z-Richtung auf dem Bewegungsabschnitt A ergibt, schraffiert dargestellt und mit dem Bezugszeichen F1 versehen. Im Bereich AB des Übergangs vom ersten Bewegungsabschnitt A zum zweiten Bewegungsabschnitt B ist die Fläche F2 der Schneide 4 am Materialvolumenabtrag beteiligt. Wie aus FIG 1 leicht ersichtlich ist, ist die Fläche F2 größer als die Fläche F1, so dass im Bereich AB des Übergangs vom ersten Bewegungsabschnitt A zum zweiten Bewegungsabschnitt B der Materialvolumenabtrag pro Zeiteinheit größer ist als im ersten Bewegungsabschnitt A. Dies hat zur Folge, dass die Oberflächenqualität des Werkstücks sich verschlechtert und so z.B. Unebenheiten auf der Oberfläche des Werkstücks auftreten. Entsprechend ist die Fläche F3, die durch die Geometrie der Schneide 4 bedingt am Materialvolumenabtrag beteiligt ist und im Bereich BC des Übergangs vom zweiten Bewegungsabschnitt B zum dritten Bewegungsabschnitt C auftritt kleiner als die Fläche F1.

Erfindungsgemäß wird somit im Rahmen des Ausführungsbeispiels die Geschwindigkeit des Werkzeugs insbesondere entlang dem örtlichen Verlauf der Bewegung des Werkzeugs, in Abhängigkeit von der Geometrie der Schneide des Werkzeugs und der Werkstückgeometrie derart angepasst, dass der durch die Bewegung des Werkzeugs pro Zeiteinheit entstehende Materialvolumenabtrag am Werkstück in einem vorgegebenen ersten Toleranzbereich liegt.

Wichtig ist festzuhalten, dass im Rahmen des Ausführungsbeispiels das Werkstück keine translatorischen Bewegungen in X-und/oder Z-Richtung im Bezug auf ein ruhendes Maschinengestell durchführt sondern nur das Werkzeug. Dies muss nicht unbedingt bei Werkzeugmaschinen allgemein der Fall sein. Werkzeugmaschinen können auch so ausgebildet sein, dass zur Bearbeitung des Werkstücks das Werkzeug im Bezug auf ein ruhendes ortfestes Maschinengestell der Werkzeugmaschine keine örtlich in einem Raum verlaufende Bewegung durchführt aber dafür das Werkstück oder dass zur Bearbeitung des Werkstücks gleichzeitig sowohl das Werkstück als auch das Werkzeug im Bezug auf das ruhende ortsfeste Maschinengestell örtlich im Raum bewegt werden. So könnte z.B. in FIG 1 anstelle oder zusätzlich zum Werkzeug 3 auch das Werkstück 2 entsprechend in X-Richtung und/oder Z-Richtung bewegt werden. Insbesondere wenn die Werkzeugmaschine, z.B. noch zusätzlich Rundachsen zur örtlichen Bewegung des Werkstücks und/oder des Werkzeugs im Raum aufweist können sich somit sehr komplexe Bewegungsabläufe ergeben.

Entscheidend für die Erfindung ist somit verallgemeinert ausgedrückt, die zwischen dem Werkzeug und dem Werkstück örtlich im Raum verlaufende Bewegung, d.h. die örtlich im Raum verlaufende Relativbewegung zwischen Werkzeug und Werkstück, unabhängig davon ob sich, zur Realisierung der zwischen dem Werkzeug 3 und dem Werkstück 2 verlaufenden Bewegung, nur das Werkzeug bewegt oder nur das Werkstück oder gleichzeitig das Werkzeug und das Werkstück.

Erfindungsgemäß wird die Geschwindigkeit einer zwischen einem Werkzeug und einem Werkstück örtlich im Raum verlaufenden Bewegung bei der Bewegung in Abhängigkeit von der Geometrie einer Schneide des Werkzeugs und der Werkstückgeometrie derart angepasst, dass der durch die Bewegung pro Zeiteinheit entstehende Materialvolumenabtrag am Werkstück in einem ersten Toleranzbereich liegt.

Die Geschwindigkeit der zwischen dem Werkzeug und dem Werkstück örtlich im Raum verlaufenden Bewegung, wird somit so angepasst dass gilt:

$$TB1 < V_T < TB2$$

$V_T$:  pro Zeiteinheit entstehender Materialvolumenabtrag, d.h. das Materialvolumen, das pro Zeiteinheit vom Werkzeug abgetragen wird.
TB1:  untere Grenze des ersten Toleranzbereichs
TB2:  obere Grenze des ersten Toleranzbereichs.

Hierzu wird im Rahmen des Ausführungsbeispiels die Geschwindigkeit des Werkzeugs entlang dem örtlichen Verlauf der Bewegung des Werkzeugs z.B. bei konkaven örtlichen Verläufen der Bewegung des Werkzeugs verringert und bei konvexen örtlichen Verläufen der Bewegung des Werkzeugs erhöht. So wird z.B. im Rahmen des Ausführungsbeispiels im Bereich AB des Übergangs vom ersten Bewegungsabschnitt A zum zweiten Bewegungsabschnitt B die Geschwindigkeit des Werkzeugs 3 und damit die Geschwindigkeit der Bewegung der Schneide 4 entlang dem örtlichen Verlauf der Bewegung des Werkzeugs verringert und im Bereich BC des Übergangs vom zweiten Bewegungsabschnitt B zum dritten Bewegungsabschnitt C erhöht. Durch die solchermaßen durchgeführte Anpassung der Geschwindigkeit des Werkzeugs 3 in Abhängigkeit von der Geometrie der Schneide des Werkzeugs und der Werkzeuggeometrie wird der durch die Bewegung des Werkzeugs pro Zeiteinheit entstehende Materialvolumenabtrag am Werkstück in dem vorgegebenen ersten Toleranzbereich gehalten.

Im Rahmen des Ausführungsbeispiels wird dabei insbesondere die Geschwindigkeit des Werkzeugs entlang dem örtlichen Verlauf der Bewegung des Werkzeugs im Bereich des Übergangs vom ersten Bewegungsabschnitt zum zweiten Bewegungsabschnitt in Abhängigkeit von der Geometrie der Schneide des Werkzeugs und der Werkstückgeometrie derart angepasst, dass der durch die Bewegung des Werkzeugs pro Zeiteinheit entstehende Materialvolumenabtrag am Werkstück im Bereich des Übergangs in einem vorgegebenen ersten Toleranzbereich liegt.

Die Zeiteinheit kann dabei z.B. eine Millisekunde betragen.

Die Werkstückgeometrie muss dabei nicht unbedingt wie im Ausführungsbeispiel z.B. über das Teileprogamm oder per Eingabe von Hand an der Werkzeugmaschine vorgegeben werden, sondern kann sich auch implizit aus dem örtlichen Verlauf einer früheren Bewegung des Werkzeugs ergeben, so dass sich die aktuelle Werkstückgeometrie aus dem örtlichen Verlauf der früheren Bewegung des Werkzeugs ergibt. Hierbei wird ausgenutzt das eine rotationssymmetrische Bearbeitung eines Werkstücks in der Regel derart erfolgt dass bei jedem neuen örtlichen Verlauf der Bewegung des Werkzeugs die Schnitttiefe S vergrößert wird und solchermaßen das Werkstück schichtweise abgetragen wird bis die gewünschte Werkstückgeometrie erreicht ist.

Der erste Toleranzbereich wird vorgegeben indem die untere und die obere Grenze des ersten Toleranzbereichs vorgegeben werden.

Eine besonders hohe Oberflächenqualität des Werkstücks lässt sich erzielen, wenn zusätzlich die zwischen Werkzeug und Werkstück örtlich im Raum verlaufende Bewegung derart durchgeführt wird, dass die Beschleunigung der Bewegung innerhalb eines zweiten Toleranzbereichs liegt und/oder die zwischen Werkzeug und Werkstück örtlich im Raum verlaufende Bewegung derart durchgeführt wird, dass der Ruck der Bewegung, d.h. die Ableitung der Beschleunigung der Bewegung nach der Zeit t, innerhalb eines dritten Toleranzbereichs liegt. Hierdurch wird, insbesondere im Bereich AB des Übergangs vom ersten Bewegungsabschnitt A zum zweiten Bewegungsabschnitt, ein krümmungsstetiger Bewegungsverlauf gewährleistet. Der zweite und der dritte Toleranzbereich, d.h. die jeweilige obere und untere Grenze des zweiten und dritten Toleranzbereichs, können entsprechend der gewünschten Oberflächenqualität vorgegeben werden.

In FIG 2 ist eine erfindungsgemäße Steuereinrichtung 5 zur Steuerung einer zwischen einem Werkzeug 3 und einem Werkstück 2 verlaufenden Bewegung bei einer Werkzeugmaschine schematisiert dargestellt. Die erfindungsgemäße Steuereinrichtung 5, die z.B. als CNC-Steuerung ausgebildet sein kann, ermittelt anhand eines Teileprogramms 8 den örtlichen Verlauf der Bewegung des Werkzeugs zur Bearbeitung des Werkstücks. Das Teileprogramm 8 wird hierzu von der Steuereinrichtung 5 eingelesen, was durch einen Pfeil 9 angedeutet ist. Die Werkstückgeometrie kann, falls sich die Werkstückgeometrie wie schon gesagt nicht implizit durch einen vorhergehend am Werkstück durchgeführten Bearbeitungsvorgang von selbst ergibt, ebenfalls mittels des Teileprogramms 8 vorgegeben werden.

Weiterhin kann der Steuereinrichtung 5 das für den Bearbeitungsvorgang zu verwendende Werkzeug, falls die Werkzeugmaschine mit mehreren Werkzeugen bestückt ist, z.B. mittels des Teileprogramms 8 vorgegeben werden. Zu jedem Werkzeug kann dann innerhalb des Teileprogramms die Geometrie der Schneide hinterlegt sein oder aber die Steuereinrichtung weist eine in der Steuereinrichtung 5 gespeicherte Datei auf, der sie zu jedem des gerade zu Bearbeitung verwendeten Werkzeugs, die zugehörige Geometrie der Schneide des Werkzeugs entnehmen kann oder aber die Geometrie der Schneide wird per Eingabe von Hand an der Maschine vorgegeben.

Entsprechend dem erfindungsgemäßen Verfahren steuert nun die Steuereinrichtung 5 im Rahmen des Ausführungsbeispiels (im Rahmen des Ausführungsbeispiels kann nur das Werkzeug örtlich im Raum bewegt werden) die Geschwindigkeit des Werkzeugs entlang dem örtlichen Verlauf der Bewegung des Werkzeugs in Abhängigkeit von der Geometrie der Schneide des Werkzeugs und der Werkstückgeometrie derart, dass der durch die Bewegung des Werkzeugs pro Zeiteinheit entstehende Materialvolumenabtrag am Werkstück in einem vorgegebenen ersten Toleranzbereich liegt. Hierzu erzeugt die Steuereinrichtung 5 entsprechende Lagesollgrößen $x_{soll}$ und $z_{soll}$ in Form von in einem äquidistanten Zeittakt erzeugten Lagesollwerten, die z.B. alle Millisekunden erzeugt werden. Entsprechend den vorgegebenen Lagesollwerten wird über das Antriebssystem 6, das Regelungsfunktionalitäten und die für die Bewegung des Werkzeugs 3 notwendigen Motoren, sowie Lagegeber zur Messung der Lage des Werkzeugs aufweist, die Bewegung des Werkzeugs 3 in Z-Richtung und in X-Richtung steuert (siehe Koordinatensystem gemäß FIG 1), was durch einen Pfeil 7 in FIG 2 dargestellt ist.

Wenn der erste Toleranzbereich sehr eng gewählt wird, wird die Geschwindigkeit der zwischen dem Werkzeug und dem Werkstück örtlich im Raum verlaufenden Bewegung bei der Bewegung in Abhängigkeit von der Geometrie der Schneide des Werkzeugs und der Werkstückgeometrie derart angepasst, dass der durch die Bewegung pro Zeiteinheit entstehende Materialvolumenabtrag am Werkstück konstant ist. Es sei an dieser Stelle angemerkt, dass im Sinne der vorliegenden Erfindung unter dem Begriff "konstant" keine absolute mathematische Konstanz zu verstehen ist, sondern dass der pro Zeiteinheit entstehende Materialvolumenabtrag am Werkstück, bei Auftreten von geringfügigen Schwankungen des pro Zeiteinheit entstehenden Materialvolumenabtrags am Werkstück, welche z.B. aufgrund von Geometrieungenauigkeiten der Werkzeugmaschine, Toleranzen der Messsysteme, regelungstechnisch bedingt, steuerungstechnisch bedingt sowie bearbeitungsprozessbedingt auftreten, immer noch als konstant im Sinne der Erfindung angesehen wird.

Weiterhin braucht das Werkstück auch nicht unbedingt, wie im Ausführungsbeispiel, rotationssymmetrisch sein, sondern kann jede beliebige Geometrie aufweisen und die Bearbeitung des Werkstücks muss auch nicht unbedingt rotationssymmetrisch erfolgen sondern kann beliebig sein.

Weiterhin kann die Bewegung des Werkzeugs und/oder des Werkstücks in allen drei Raumdimensionen erfolgen.

Der Materialvolumenabtrag kann z.B. in Form des Spanvolumens vorliegen.

Weiterhin sei an dieser Stelle noch einmal angemerkt, dass der örtliche Verlauf der zwischen dem Werkzeug und dem Werkstück örtlich im Raum verlaufenden Bewegung bei einer Werkzeugmaschine anhand eines Teileprogramms ermittelt wird.

Die Erfindung weist weiterhin den Vorteil auf, dass die Erfindung auch bei schon bestehenden Teileprogrammen angewendet werden kann und somit auch bei der Verwendung bestehender Teileprogramme die Vorteile der Erfindung erzielt werden können.

## Patentansprüche

1. Verfahren zur Steuerung einer zwischen einem Werkzeug (3) und einem Werkstück (2) örtlich im Raum verlaufenden Bewegung bei einer Werkzeugmaschine, wobei die Geschwindigkeit der Bewegung bei der Bewegung in Abhängigkeit von der Geometrie einer Schneide (4) des Werkzeugs und der Werkstückgeometrie derart angepasst wird, dass der durch die Bewegung pro Zeiteinheit entstehende Materialvolumenabtrag am Werkstück (2) in einem vorgegebenen ersten Toleranzbereich liegt.

2. Verfahren nach Anspruch 1, **dadurch gekennzeichnet, dass** die Bewegung einen ersten Bewegungsabschnitt (A) und einen auf den ersten Bewegungsabschnitt direkt folgenden zweiten Bewegungsabschnitt (B) aufweist, wobei auf dem zweiten Bewegungsabschnitt (B) die Bewegung in einer von der Bewegung auf dem ersten Bewegungsabschnitt (A) unterschiedlichen Bewegungsrichtung (U) erfolgt, wobei die Geschwindigkeit der Bewegung im Bereich (AB) des Übergangs vom ersten Bewegungsabschnitt (A) zum zweiten Bewegungsabschnitt (B) in Abhängigkeit von der Geometrie der Schneide (4) des Werkzeugs (3) und der Werkstückgeometrie derart angepasst wird, dass der durch die Bewegung pro Zeiteinheit entstehende Materialvolumenabtrag am Werkstück (3) im Bereich des Übergangs in einem vorgegebenen ersten Toleranzbereich liegt.

3. Verfahren nach einem der vorhergehenden Ansprüche, **dadurch gekennzeichnet, dass** die Bewegung derart durchgeführt wird, dass die Beschleunigung der Bewegung in einem vorgegebenen zweiten Toleranzbereich liegt.

4. Verfahren nach einem der vorhergehenden Ansprüche, **dadurch gekennzeichnet, dass** die Bewegung derart durchgeführt, dass der Ruck der Bewegung in einem vorgegebenen dritten Toleranzbereich liegt.

5. Steuereinrichtung zur Steuerung einer zwischen einem Werkzeug (3) und einem Werkstück (2) örtlich im Raum verlaufenden Bewegung bei einer Werkzeugmaschine, wobei die Steuereinrichtung (5) derart ausgebildet ist, dass von der Steuereinrichtung (5) die Geschwindigkeit der Bewegung bei der Bewegung in Abhängigkeit von der Geometrie einer Schneide (4) des Werkzeugs (3) und der Werkstückgeometrie derart angepasst wird, dass der durch die Bewegung pro Zeiteinheit entstehende Materialvolumenabtrag am Werkstück (3) in einem vorgegebenen ersten Toleranzbereich liegt.

6. Werkzeugmaschine mit einer Steuereinrichtung nach Anspruch 5.

# FIG 1

# FIG 2

$X_{Soll}$  $Z_{Soll}$

Europäisches
Patentamt

European
Patent Office

Office européen
des brevets

**EUROPÄISCHER RECHERCHENBERICHT**

**Nummer der Anmeldung**

EP 08 17 2761

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 196 37 191 A1 (SIEMENS AG [DE]) 2. April 1998 (1998-04-02) * Spalte 1, Zeilen 3-29 * * Spalte 2, Zeile 6 - Spalte 3, Zeile 15 * * Spalte 3, Zeilen 36-65 * * Spalte 4, Zeile 53 - Spalte 5, Zeile 2; Abbildung 1 * ----- | 1,2,5,6 | INV. G05B19/416 |
| X | US 2002/164221 A1 (IZUTSU YUKIO [JP] ET AL) 7. November 2002 (2002-11-07) * Absätze [0010] - [0012], [0015], [0016], [0021], [0023], [0024], [0039], [0040], [0044] - [0048], [0058] - [0061] * | 1,5,6 | |
| Y | | 2,4 | |
| | ----- | | |
| X | DE 10 2004 021866 A1 (WEIGL ENGINEERING GMBH [DE]) 1. Dezember 2005 (2005-12-01) * Absätze [0005] - [0008], [0015], [0021] - [0032]; Ansprüche 1,2 * | 1,5,6 | |
| Y | | 2 | RECHERCHIERTE SACHGEBIETE (IPC) |
| | ----- | | |
| X | FAROUKI R T ET AL: "Variable-feedrate CNC interpolators for constant material removal rates along Pythagorean-hodograph curves" COMPUTER AIDED DESIGN, ELSEVIER PUBLISHERS BV., BARKING, GB, Bd. 30, Nr. 8, 1. Juli 1998 (1998-07-01), Seiten 631-640, XP004129094 ISSN: 0010-4485 Kapitel "Curvature-dependent feedrate", erster Absatz; Kapitel "Feedrate function", die letzten drei Absätze; Kapitel "CNC interpolation algorithm", die letzten vier Absätze; Kapitel "Experimental results" | 1,5,6 | G05B |
| Y | ----- -/-- | 2 | |

Der vorliegende Recherchenbericht wurde für alle Patentansprüche erstellt

| Recherchenort | Abschlußdatum der Recherche | Prüfer |
|---|---|---|
| Den Haag | 14. Mai 2009 | Hristov, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................

& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 08 17 2761

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MARCHENKO TIKHON, TAE JO KO, SEUNG HYUN LEE, HEE SOOL KIM: "NURBS interpolator for constant material removal rate in open NC machine tools" INTERNATIONAL JOURNAL OF MACHINE TOOLS & MANUFACTURE, 3. Oktober 2003 (2003-10-03), XP002527951 ELSEVIER, US Kapitel 2.2, die letzten zwei Absätze; Kapitel 5, Kapitel 6, die ersten 3 Absätze, Kapitel 7,8 | 1,5,6 | |
| Y | ----- | 2-4 | |
| X | JO KO T ET AL: "Machineability in NURBS interpolator considering constant material removal rate" INTERNATIONAL JOURNAL OF MACHINE TOOLS AND MANUFACTURE, ELSEVIER, US, Bd. 45, Nr. 6, 1. Mai 2005 (2005-05-01), Seiten 665-671, XP025333635 ISSN: 0890-6955 [gefunden am 2005-05-01] Kapitel 2.3, 3, 4, 5; Abbildungen 1-3, 5-10 | 1,5,6 | |
| Y | ----- | 2-4 | RECHERCHIERTE SACHGEBIETE (IPC) |
| A | US 2004/167659 A1 (SCHERER JERRY G [US]) 26. August 2004 (2004-08-26) * das ganze Dokument * ----- | 1-6 | |
| A | US 2008/065257 A1 (HE JIANMIN [US] ET AL) 13. März 2008 (2008-03-13) * das ganze Dokument * ----- | 1-6 | |

Der vorliegende Recherchenbericht wurde für alle Patentansprüche erstellt

| Recherchenort | Abschlußdatum der Recherche | Prüfer |
|---|---|---|
| Den Haag | 14. Mai 2009 | Hristov, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 17 2761

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2009

| Im Recherchenbericht angeführtes Patentdokument | Datum der Veröffentlichung | Mitglied(er) der Patentfamilie | Datum der Veröffentlichung |
|---|---|---|---|
| DE 19637191 A1 | 02-04-1998 | KEINE | |
| US 2002164221 A1 | 07-11-2002 | JP 2002200540 A | 16-07-2002 |
| DE 102004021866 A1 | 01-12-2005 | KEINE | |
| US 2004167659 A1 | 26-08-2004 | BR PI0407654 A<br>EP 1599770 A2<br>JP 2006518674 T<br>WO 2004077181 A2 | 21-02-2006<br>30-11-2005<br>17-08-2006<br>10-09-2004 |
| US 2008065257 A1 | 13-03-2008 | WO 2008033250 A2 | 20-03-2008 |

EPO FORM P0461

Für nähere Einzelheiten zu diesem Anhang : siehe Amtsblatt des Europäischen Patentamts, Nr.12/82